# EUROPÄISCHE PATENTSCHRIFT

(11) **EP 0 266 543 B1**
(45) Veröffentlichungstag und Bekanntmachung des Hinweises auf die Patenterteilung: **08.06.1994**
(21) Anmeldenummer: 87114099.2
(22) Anmeldetag: 26.09.1987
(51) Int. Cl.: C08F 6/28, C08F 10/00, C08F 2/00

(54) **Abscheidesystem zur Reduktion der Feststoffemission bei Entspannungsvorgängen an Hochdruckpolymerisationsreaktoren**
Separating system to reduce the emission of solids during relaxation processes in high pressure polymerization reactors
Système de séparation pour réduire l'émission de solides lors des procédés de relaxation dans des réacteurs de polymérisation à haute pression

(30) Priorität: 04.10.1986 DE 3633819
(43) Veröffentlichungstag der Anmeldung: 11.05.1988
(73) Patentinhaber: BASF Aktiengesellschaft, 67063 Ludwigshafen (DE)
(72) Erfinder: Kanne, Friedrich, Dr., D-5047 Wesseling (DE); Pfleger, Klaus, Dr., D-5047 Wesseling (DE); Glomb, Hans, D-5047 Wesseling (DE); Arnold, Gerhard, D-5047 Wesseling (DE); Boettcher, Klaus, Dr., D-5047 Wesseling (DE); Kursawe, Siegfried, D-5047 Wesseling (DE)

(56) Entgegenhaltungen:
- DE-A- 2 120 624
- DE-A- 2 203 428
- FR-A- 2 116 147
- US-A- 4 153 774

## Beschreibung

Die vorliegende Erfindung betrifft ein Abscheidesystem für Röhrenreaktoren oder Autoklaven, die zur Polymerisation von Ethylen bzw. Copolymerisation des Ethylens mit ethylenisch ungesättigten Comonomeren in Gegenwart von Initiatoren bei Drucken von 500 bis 4000 bar und Temperaturen von 150 bis 350°C eingesetzt werden, zum Ausschalten der Feststoffemission bei Notentspannungsvorgängen des im Reaktor oder Autoklaven vorliegenden Reaktionsgemisches in die Atmosphäre.

Die Polymerisation des Ethylens bzw. die Copolymerisation des Ethylens mit anderen ethylenischen, polymerisierbaren Monomeren wird in Röhrenreaktoren oder Autoklaven bei Drücken bis 4000 bar und Temperaturen von 150 bis 350°C in Gegenwart von Initiatoren (Radikalbildnern) und gegebenenfalls Moderatoren (Reglern) vorgenommen.

Bei der exothermen Polymerisations-Reaktion wird ca. 800 Kcal Reaktionswärme pro kg gebildetes Polymerisat frei, die möglichst rasch entfernt werden muß. Dies ist notwendig, um Überhitzungen des Reaktionsgemisches zu vermeiden, die zum Zerfall des Ethylens und möglicherweise Polyethylens in Kohlenstoff, Wasserstoff und Methan führen. Die Zerfallsreaktionen sind ebenfalls stark exotherm und verlaufen nach den folgenden Gleichungen:

1)

C₂H₄ → C+CH₄+30 Kcal/Mol

2)

C₂H₄ →2C+2H₂+11 Kcal/Mol

3)

1/n (C₂H₄)n→C+CH₄+8 Kcal/Mol

Bevorzugt (85 - 95 %) verläuft der Zerfall des Ethylens nach Gleichung 1) unter Bildung von Methan und Kohlenstoff, wobei Temperaturen bis zu 1550°C erreicht werden; zu einem geringen Teil (10 - 15 %) entsteht beim Ethylenzerfall Wasserstoff und Kohlenstoff. In diesem Fall können die Temperaturen bis 680°C ansteigen.

Es ist deshalb sehr wichtig beim Betrieb eines Röhrenreaktors oder Autoklaven die Polymerisation kontrolliert, d.h. mit Vorkehrungen zur hinreichenden Abfuhr der Reaktionswärme durchzuführen. Dies gelingt in der Praxis jedoch nicht immer. Durch technische Defekte, Versagen von Steuer- bzw. Meßeinrichtungen kommt es zu Situationen, in denen die notwendige Wärmeabfuhr nicht mehr gewährleistet ist und eine Zersetzung des im Reaktor befindlichen Reaktionsgemisches einsetzt. In einem solchen Fall wird mit Hilfe einer gebräuchlichen Automatik ein sogenanntes Notprogramm eingeleitet:

Die Beschickung des Reaktors mit Ethylen ggf. Comonomeren, Initiatoren und Moderatoren wird unterbunden, am Reaktor werden Ventile geöffnet, über die das im Reaktor befindliche Reaktionsgemisch zur Atmosphäre entspannt wird. Es ist bekannt, daß beim Entspannen des Reaktionsgemisches von Autoklaven oder Rohrreaktoren ins Freie die Zündung des heißen Gas-/Produktgemisches erfolgte.

In der Literatur sind die resultierenden Explosionen als "aerials" bezeichnet worden. Zur Verhinderung von "aerials" ist in der US-Patentschrift 3 781 256 ein Weg aufgezeigt worden. Das heiße, einer Zersetzung unterworfene Reaktionsgemisch wird nach Verlassen des Reaktors in eine Rohrleitung geführt, in der sich mit Wasser gefüllte Plastiksäcke befinden. Durch die Temperatur und den sich beim Einströmen des Reaktionsgemisches im sogenannten Überdach-Rohr aufbauenden Druck werden die Plastiksäcke zerstört; das ausströmende Wasser soll dabei das Reaktionsgemisch soweit abkühlen, daß es zu keiner Zündung beim Austritt des Gases in die Atmosphäre kommt.

Dieses bekannte Vorgehen vermindert zwar die Gefahr von Explosionen beim Entspannen der Reaktionsgemische ins Freie, die Emission von Kohlenwasserstoffen und Feststoffpartikeln wie Ruß, fein- und grobkörnigem Polyethylenpulver wird aber nicht vermieden. Je nach Größe des eingesetzten Reaktors werden bei einem Entspannungsvorgang bis zu 200 kg Feststoff emittiert, was zu einer sehr starken Belastung der Umwelt führt.

Der vorliegenden Erfindung liegt daher die Aufgabe zugrunde, ein Abscheidesystem zu entwickeln, mit dem es gelingt, die bei Entspannungsvorgängen an Röhrenreaktoren oder Autoklaven, die zur Polymerisation von Ethylen eingesetzt werden, auftretende Emission von Feststoffen auszuschalten.

Die Aufgabe wird erfindungsgemäß mit Hilfe eines Abscheidesystems, das die in einem Rohrreaktor bzw. Autoklaven vorliegenden Reaktionsgemische bei Entspannungsvorgängen vor dem Austritt ins Freie durchlaufen, gemäß der Patentansprüche 1 bis 6 gelöst.

Die Entspannungen des Reaktionsgemisches aus den Reaktionsapparaturen (Autoklaven oder Röhrenreaktoren) werden aus mehreren Gründen vorgenommen bzw. müssen ausgeführt werden; die Auslösung eines sogenannten Notprogramms wird entweder durch Knopfdruck (von Hand) oder - wie in den meisten Fällen - durch eine Automatikschaltung ausgeführt. Letztere stellt ein handelsübliches Meß- und Regelsystem (z.B. AEG-Logistat) dar. Falls eine der oberen Grenzwertmarken für die Druck- und Temperaturüberwachung des Reaktors erreicht wird, erfolgt die Entspannung des Reaktionsgemisches automatisch durch Öffnen von mehreren Ventilen am Reaktor. Dies geschieht beispeilsweise bei einer Zersetzung des Reaktionsgemisches, aber auch bei einer Fehlmessung bzw. bei einem anderen technischen Defekt. Bei den beiden letzteren Fällen spricht man von sogenannten Fehlauslösungen. Dabei wird das im Reaktor vorliegende Reaktionsgemisch, das zwar keiner Zersetzung unterworfen ist, ebenfalls aus dem Reaktor ins Freie entspannt. Es wird dabei kein Ruß, sondern Polyethylenpartikel zusammen mit dem Ethylen und gegebenenfalls sonstigen Kohlenwasserstoffen ins Freie abgegeben.

Erfindungsgemäß wird nun so verfahren, daß das vom Reaktor kommende Reaktionsgemisch beim Entspannen ein Abscheidesystem durchlaufen muß, bevor es zur Atmosphäre gelangt.

In den Zeichungen ist ein Ausführungsbeispiel der Erfindung schematisch dargestellt, das im folgenden näher erläutert wird.

Sie zeigen:

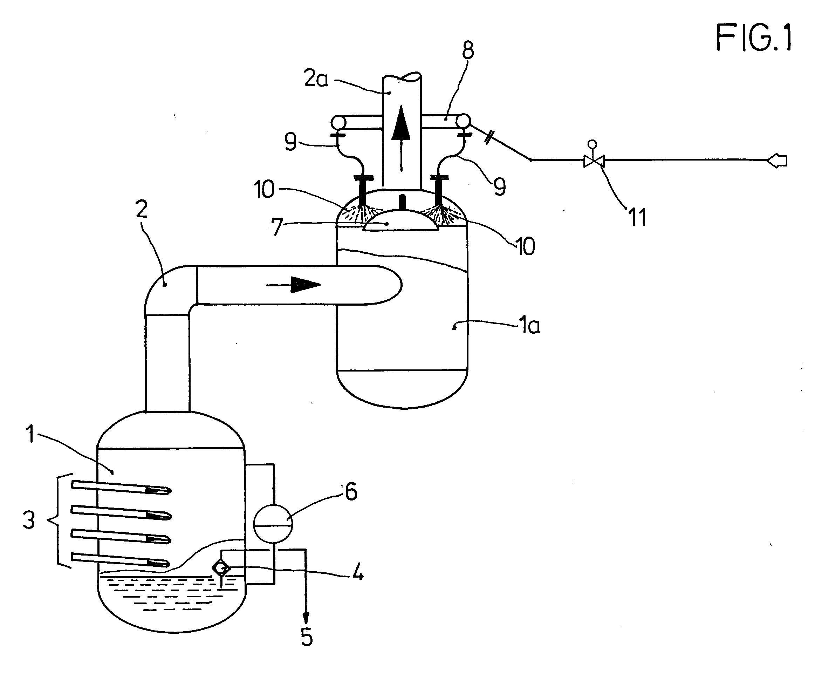

- Figur 1: eine Seitenansicht des Abscheidesystems mit zwei Abscheidebehältern.

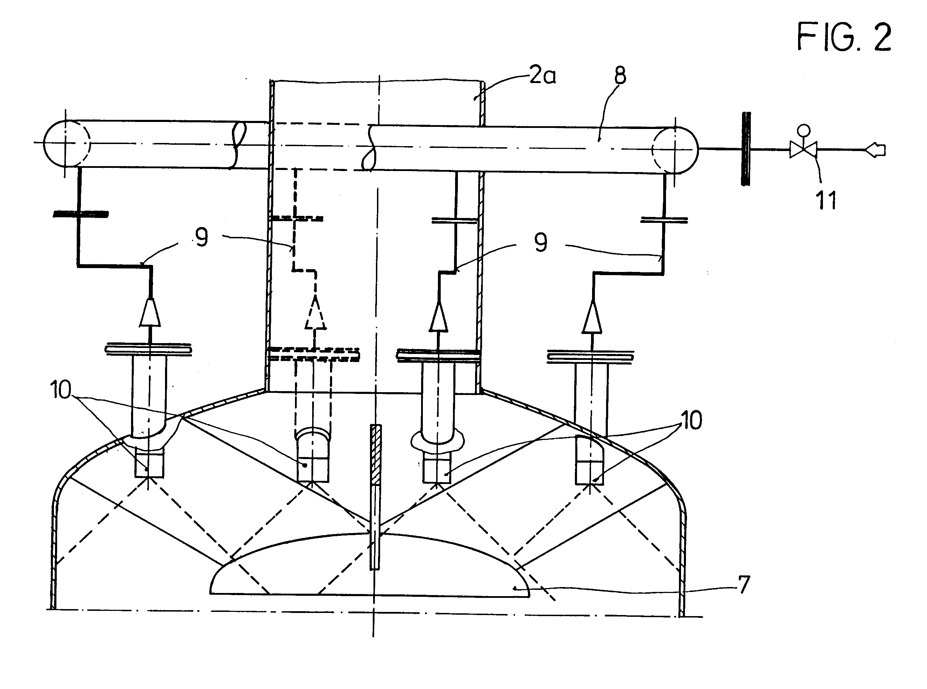

- Figur 2: eine Darstellung der vor das Austrittsrohr des zweiten Abscheidebehälters installierten Einbauten.

Das Abscheidesystem 1 bis 11 besteht aus einem Abscheidebehälter 1, der vorzugsweise im unteren Viertel mit Wasser befüllt ist, und dem über vorzugsweise relativ weite Rohrleitungen mindestens ein Abscheidebehälter nachgeschaltet ist. Bevorzugt wird das Abscheidesystem mit zwei oder drei Abscheidebehältern ausgelegt. Die dem Abscheidebehälter 1 nachgeschalteten Abscheidebehälter 1a sind mit Einbauten versehen, die einem direkten Austreten von Feststoffpartikeln ins Freie entgegenwirken.

Die Ausblaseleitungen 3 der Entspannungsventile des in den Zeichnungen nicht dargestellten Reaktors sind einzeln auf den Abscheidebehälter 1 geführt. Je nach Größe des Reaktors arbeitet man mit zwei oder mehreren Entspannungsventilen und/oder Berstscheiben. Ist der Reaktor mit Berstscheiben ausgerüstet, dann sind deren Ausblaseleitungen ebenfalls mit dem Abscheidebehälter 1 verbunden. Der Eintritt der Ausblaseleitungen in den Abscheidebehälter 1 ist durch tangential angeordnete Druckrohre so gestaltet, daß diese nach unten auf die Oberfläche des in den Behälter eingefüllten Wassers gerichtet sind und oberhalb des Wasserspiegels enden. Die Befüllung des Behälters wird bis etwa zu einem Viertel vorgenommen. Damit sich der Wasserstand im Abscheidebehälter 1 gleichmäßig einstellen läßt, ist der Behälter mit einem Wasserüberlauf (4 bis 5) versehen. In das Überlaufrohr ist eine Klappe 4 installiert, die bei Überdruck im Behälter schließt und das Ausströmen von Gas über den Wasserüberlauf verhindert.

Als Sicherheitseinrichtung ist oberhalb des Wasserstandes an der Behälteraußenwand eine radioaktive Standanzeige 6 installiert, durch die eventuelle vorliegende Produktansammlungen im Behälter bzw. Verstopfungen des Wasserüberlaufes angezeigt werden; die Standanzeige 6 ist für den Betrieb des Abscheidesystems empfehlenswert, für eine wirksame Feststoff-Abscheidung jedoch nicht wesentlich.

Im Abscheidebehälter 1 trifft das heiße Reaktionsgemisch auf das im unteren Viertel des Behälters vorliegende Wasser. Es kommt zur Abkühlung des heißen Gas-/Produktgemisches, wobei eine große Menge des Wassers verdampft. Der Großteil der beim Entspannungsvorgang vom Reaktor kommenden Feststoffe wird dabei im Abscheidebehälter 1 zurückgehalten. Etwa 20 - 40 % der Feststoffe werden jedoch mit dem den Abscheidebehälter 1 verlassenden Massestrom weggeführt. Letzterer enthält außer den Feststoffen das entspannte Ethylen, ggf. andere Kohlenwasserstoffe, Dampf und mitgerissenes Wasser. Dieses Produktgemisch wird vom Kopf des Abscheidebehälters 1 über eine relativ weite Rohrleitung 2 in einen Abscheidebehälter 1a eingeleitet. Die Rohrleitung 2 zwischen den beiden Behältern sollte am Eingang zum Abscheidebehälter 1a einen Durchmesser von 200 bis 1000 mm, bevorzugt 40 bis 500 mm haben.

Der Rohrleitungseingang zum Abscheidebehälter 1a ist seitlich und ebenfalls tangential angeordnet. Der Abscheidebehälter 1a ist nicht mit Wasser befüllt; an seinem Deckel ist ein 200 bis 400 mm weites Austrittrohr 2a installiert.

An der Unterseite des Deckels, im Innern des Abscheidebehälters 1a vor dem Austrittsrohr 2a ist in einem relativ kleinem Abstand zum Deckel bzw. zur Behälterinnenwand ein Klöpperboden 7 eingebaut.

Bevorzugt wird der Klöpperboden 7 in einem Abstand von 100 bis 200 mm montiert, d.h. sein Durchmesser wird um 200 bis 400 mm kleiner gewählt als der Durchmesser des Abscheidebehälters 1a.

Durch den Einbau des Klöpperboden 7 wird das Ausströmen des entspannten Reaktionsgemisches auf direktem Weg aus dem Behälter verhindert. Der Massestrom wird vielmehr abgebremst und umgelenkt in die relativ enge Passage zwischen dem Rand des Klöpperbodens 7 und der Behälterinnenwand bzw. Deckelwand. Durch den Behälterdeckel sind von einer um das Austrittsrohr 2a außen angebrachten Ringleitung 8 kommend, vier in gleichen Abständen zueinander angeordnete Leitungen 9 geführt.

Am Ende dieser Leitungen 9 ist jeweils eine Spezialdüse 10 installiert. Der Einbau weiterer Düsen ist durchaus möglich und empfiehlt sich beim Einsatz von Abscheidebehältern mit großen Durchmessern. Die eingesetzten Spezialdüsen 10 sind im Handel erhältlich; als geeignet erwiesen sich Axial-Vollkegeldüsen der Fa. Lechler, Gelsenkirchen, vom Typ SZ 5 bis SZ 14 mit einem Sprühwinkel von 60 bis 90°C. Die Düsen 10 werden mit Druckwasser oder Kondensat beschickt, wobei der Vordruck auf der Ringleitung 8 mindestens um 3 bar höher sein muß als der maximale Druck der beim Entspannen des Reaktors im Abscheidebehälter 1 erzeugt wird. Die Beschickung der Düsen 10 mit Druckwasser oder Kondensat wird mit Hilfe eines Regelventils 11 vorgenommen. Dabei wird das Regelventil 11 zeitgleich mit der Auslösung des sogenannten Notprogrammes am Reaktor, d.h. sofort zu Beginn des Entspannungsvorganges geöffnet. Die Menge des aus den Düsen ausströmenden Druckwassers bzw. Kondensates wird mengenmäßig so eingestellt, daß sich über den gesamten Querschnitt des Raumes zwischen Behälterdeckel und Oberseite des Klöpperbodens 7 ein dichter Wasserschleier ausbildet, der dem zum Austrittrohr 2a strebenden Massenstrom entgegenwirkt.

Durch die erfindungsgemäße Verfahrensweise gelingt es, die im entspannten Reaktionsgemisch vorliegenden Feststoffe praktisch vollkommen im Abscheidesystem 1 bis 11 zurückzuhalten. Aus dem Austrittsrohr 2a gelangt kein Ruß bzw. keine Polyethylenpartikel, sondern lediglich das beim Entspannen vom Reaktor kommende Ethylen und ggf. andere gasförmige Kohlenwasserstoffe ins Freie.

Die Dauer der Verdüsung des Druckwassers oder Kondensates wird so gewählt, daß hiermit erst aufgehört wird, wenn im Verlauf des Entspannungsvorganges der Druck im Abscheidebehälter 1a unter 1 bar abgesunken ist.

Bei den gebräuchlichen Reaktorgrößen arbeitet man im allgemeinen mit Zeiten zwischen 10 und 300, vorzugsweise 15 bis 90 Sekunden; dabei werden Wassermengen von 3 bis 20, vorzugsweise 5 bis 10 Liter pro Sekunde und Düse zum Aufbau des Wasserschleiers benötigt. Die für eine optimale Abscheidewirkung benötigte Wassermenge und die Zeit für deren Verdüsung muß dem jeweiligen Abscheidervolumen angepaßt werden. Letzteres ist wieder der vom Reaktor kommenden Menge an Reaktionsgemisch anzugleichen. In der Praxis haben sich Abscheider mit einem Volumen von 2 bis 25 m³ bewährt; für eine gute Abscheidewirkung ist es jedoch kein Nachteil, wenn Behälter mit noch größerem Volumen genommen werden.

Das Verhältnis der Volumina der Abscheidebehälter zu dem des Reaktors sollte im Interesse einer wirksamen Abscheidung der Feststoffe größer als 2 : 1 gewählt werden, bevorzugt arbeitet man mit Volumenverhältnissen, die zwischen 4 : 1 bis 10 : 1 liegen.

### Beispiel 1

Beide Behälter des Abscheidesystems 1 bis 11 haben ein Volumen von je 4,3 m³ bei einem Durchmesser von 1200 mm. Der Abscheidebehälter 1 ist mit 950 l Wasser gefüllt. Die Verbindungsleitung 2 zwischen den Behältern hat einen Durchmnesser von 400 mm. Im Abscheidebehälter 1a ist vor das Austrittsrohr 2a, das einen Durchmesser von 400 mm besitzt, im Abstand von 100 mm zur Unterseite des Behälterdeckels der Klöpperboden 7, der einen Durchmesser von 1000 mm hat, montiert. Im Raum zwischen der Unterseite des Deckels und der Oberseite des Klöpperbodens 7 sind vier Spezialdüsen 10 (Firma Lechler, Type SZ 6/461.286) installiert, die über die Ringleitung 8 mit Kondensat versorgt werden. Der Vordruck auf der Ringleitung 8 beträgt 30 bar; die Einspeisung des Kondensates erfolgt mit Hilfe des Regelventiles 11 zeitgleich mit dem Öffnen der Entspannungsventile am Reaktor. Vom Reaktor werden 0,6 t Reaktionsgemisch entspannt.

Die während des Entspannungsvorganges auftretenden maximalen Drücke liegen bei 6,9 bar im Abscheidebehälter 1 und 6,4 bar im Abscheidebehälter 1a und werden nach etwa 1,5 Sekunden erreicht. Die Kondensateinspeisung wurde 20 Sekunden lang vorgenommen, wobei je Düse 5,8 l Kondensat innerhalb einer Sekunde zur Bildung des Wasserschleiers beitrugen. Nach Beendigung der Verdüsung des Kondensates war der Druck im Abscheidebehälter 1a auf einen Wert kleiner 0,3 bar abgefallen.

Im Abscheidebehälter 1 wurden 95 kg, im Abscheidebehälter 1a wurden 35 kg Feststoffe abgeschieden.

Eine Emission von Feststoffen zur Atmosphäre trat nicht ein.

### Beispiel 2 (Vergleich)

Bei Entspannen des gleichen Reaktors wie im Beispiel 1 mit 0,6 t Reaktionsgemisch ins Freie ohne Abscheidesystem werden ca. 130 kg Feststoffe emittiert.

Wird das Entspannen des oben genannten Reaktors in einen Behälter mit einem Volumen von 4,3 m³ vorgenommen, wobei der Behälter keine Einbauten und keine Düsen zur Bildung eines Wasserschleiers besitzt, dann ist die Abscheidewirkung ebenfalls mangelhaft.

Im Behälter werden 95 kg Feststoffe gefunden; man kann also davon ausgehen, daß in diesem Fall 35 kg fein- und grobkörnige Polyethylenpartikel in die Atmosphäre entspannt wurden.

## Patentansprüche

1. Abscheidesystem (1 bis 11) für Röhrenreaktoren oder Autoklaven, die zur Polymerisation von Ethylen bzw. Copolymerisation des Ethylens mit ethylenisch ungesättigten Comonomeren in Gegenwart von Initiatoren bei Drücken von 500 bis 4000 bar und Temperaturen von 150 bis 350°C eingesetzt werden, zum .Ausschalten der Feststoffemission bei Notentspannungsvorgängen des im Reaktor oder Autoklaven vorliegenden Reaktionsgemisches in die Atmosphäre, gekennzeichnet durch mindestens zwei in Serie installierte Abscheidebehälter (1, 1a), über die das Reaktionsgemisch gefahren wird, bevor es zur Atmosphäre gelangt.

2. Abscheidesystem (1 bis 11) gemäß Anspruch 1, dadurch gekennzeichnet, daß bei zwei Abscheidebehältern der Abscheidebehälter (1) bis zu einem Viertel seines Volumens mit Wasser gefüllt ist und der Abscheidebehälter (1a) ein seitliches Produkteintrittsrohr (2) mit einem Durchmesser von 200 bis 1000 mm, vorzugsweise 400 bis 500 mm besitzt und nicht mit Wasser befüllt wird.

3. Abscheidesystem (1 bis 11) gemäß Anspruch 1 und 2, dadurch gekennzeichnet, daß bei zwei Abscheidebehältern der Abscheidebehälter (1a) vor seinem Austrittsrohr (2a) mit Einbauten (7, 10) versehen ist, die bewirken, daß das entspannte Reaktionsgemisch vor Erreichen des Austrittsrohres (2a) umgelenkt wird und einen Wasserschleier passiert.

4. Abscheidesystem (1 bis 11) gemäß Anspruch 3, dadurch gekennzeichnet, daß bei zwei Abscheidebehältern der Wasserschleier vor dem Austrittsrohr (2a) des Abscheidebehälters (1a) zeitgleich mit dem Einströmen des Reaktionsgemisches beim Entspannungsvorgang in das Abscheidesystem (1 bis 11) aufgebaut wird.

5. Abscheidesystem (1 bis 11) gemäß Anspruch 3 und 4, dadurch gekennzeichnet, daß der Wasserschleier durch Düsen (10) erzeugt wird, über die innerhalb von 10 bis 300, vorzugsweise 15 bis 90 Sekunden eine Wassermenge von 3 bis 20, vorzugsweise 5 bis 10 Liter pro Sekunde und Düse fließt.

6. Abscheidesystem (1 bis 11) gemäß Anspruch 1 bis 5, dadurch gekennzeichnet, daß bei zwei Abscheidebehältern das Volumen der Abscheidebehälter (1, 1a) zu dem des Reaktors im Verhältnis von 2 : 1 bis 20 : 1, bevorzugt zwischen 4 : 1 und 10 : 1 steht.

## Claims

1. A separation system (1 to 11) for tube reactors or autoclaves, which are used for the polymerization of ethylene or copolymerization of ethylene with ethylenically unsaturated comonomers in the presence of an initiator under from 500 to 4,000 bar and at from 150 to 350°C, for eliminating the emission of solids during emergency pressure relief processes of the reaction mixture present in the reactor or autoclave into the atmosphere, which comprises two or more separating containers (1, 1a) installed in series, via which the reaction mixture is fed before it reaches the atmosphere.

2. A separation system (1 to 11) as claimed in claim 1, wherein, in the case of two separating containers, the separating container (1) is filled to one fourth of its volume with water and the separating container (1a) has a lateral product inlet pipe (2) having a diameter of from 200 to 1,000 mm, preferably from 400 to 500 mm, and is not filled with water.

3. A separation system (1 to 11) as claimed in claim 1 or 2, wherein, in the case of two separating containers, the separating container (1a) is provided, upstream of its outlet pipe (2a), with baffles (7, 10) which cause the let-down reaction mixture to be deflected and to pass a water film before reaching the outlet pipe (2a).

4. A separation system (1 to 11) as claimed in claim 3, wherein, in the case of two separating containers, the water film upstream of the outlet pipe (2a) of the separating tank (1a) is formed simultaneously with the inflow of the reaction mixture into the separation system (1 to 11) during the pressure relief process.

5. A separation system (1 to 11) as claimed in claim 3 or 4, wherein the water film is produced by nozzles (10, via which from 3 to 20, preferably from 5 to 10, liters of water per second per nozzle flow in the course of from 10 to 300, preferably from 15 to 90, seconds.

6. A separation system (1 to 11) as claimed in any of claims 1 to 5, wherein, in the case of two separating containers, the ratio of the volume of the separating containers (1, 1a) to that of the reactor is from 2:1 to 20:1, preferably from 4:1 to 10:1.

## Revendications

1. Système de séparation (1 à 11) pour des autoclaves ou des réacteurs à tubes, que l'on utilise pour la polymérisation de l'éthylène ou la copolymérisation de l'éthylène avec des comonomères éthyléniquement insaturés, en présence d'amorceurs, sous des pressions de 500 à 4000 bars et à des températures de 150 à 350°C, en vue de la séparation de l'émission de substances solides au cours de processus de détente d'urgence du mélange de réaction présent dans l'autoclave ou le réacteur dans l'atmosphère, qui se caractérise par au moins deux récipients de séparation installés en série (1, 1a) par lesquels on conduit le mélange réactionnel avant que celui-ci parvienne dans l'atmosphère.

2. Système de séparation (1 à 11) suivant la revendication 1, caractérisé en ce que, dans le cas de deux récipients de séparation, le récipient de séparation (1) est rempli jusqu'à un quart de son volume d'eau et le récipient de séparation (1a) comporte un tube d'entrée de produit latéral (2) d'un diamètre de 200 à 1000 mm, de préférence de 400 à 500 mm et n'est pas rempli d'eau.

3. Système de séparation (1 à 11) suivant les revendications 1 et 2, caractérisé en ce que, dans le cas de deux récipients de séparation, le récipient de séparation (1a) est pourvu, avant sont tube de sortie (2a), de chicanes (7, 10) qui assurent que le mélange de réaction détendu soit dévié avant d'atteindre le tube de sortie (2a) et passe par un écran ou rideau d'eau.

4. Système de séparation (1 à 11) suivant la revendication 3, caractérisé en ce que, dans le cas de deux récipients de séparation, l'écran ou rideau d'eau est réalisé avant le tube de sortie (2a) du récipient de séparation (1a) au même moment que l'entrée du mélange de réaction au cours du processus de détente dans le système de séparation (1 à 11).

5. Système de séparation (1 à 11) suivant les revendications 3 et 4, caractérisé en ce que l'écran ou rideau d'eau est obtenu à l'aide d'ajutages (10) passent, en l'espace de 10 à 300 secondes, de préférence 15 à 90 secondes, une proportion d'eau de 3 à 20 litres, de préférence 5 à 10 litres, par seconde et par ajutage.

6. Système de séparation (1 à 11) suivant l'une quelconque des revendications 1 à 5, caractérisé en ce que, dans le cas de deux récipients de séparation, le volume du récipient de séparation (1, 1a) se situe, par rapport au réacteur, dans le rapport de 2:1 à 20:1, de préférence 4:1 à 10:1.
